(19) **Europäisches Patentamt European Patent Office Office européen des brevets**

(11) **EP 1 459 003 B2**

(12) **NOUVEAU FASCICULE DE BREVET EUROPEEN**
Après la procédure d'opposition

(45) Date de publication et mention de la décision concernant l'opposition:
**08.01.2014 Bulletin 2014/02**

(45) Mention de la délivrance du brevet:
**26.04.2006 Bulletin 2006/17**

(21) Numéro de dépôt: **02805791.7**

(22) Date de dépôt: **10.12.2002**

(51) Int Cl.:
***F16L 11/08*** *(2006.01)*

(86) Numéro de dépôt international:
**PCT/FR2002/004256**

(87) Numéro de publication internationale:
**WO 2003/056224 (10.07.2003 Gazette 2003/28)**

(54) **CONDUITE FLEXIBLE A HAUTE RESISTANCE A LA COMPRESSION AXIALE ET SA METHODE DE FABRICATION**

**FLEXIBLES ROHR MIT HOHER AXIALDRUCKFESTIGKEIT UND HERSTELLUNGSVERFAHREN DAFÜR**

**FLEXIBLE PIPE WITH HIGH AXIAL COMPRESSION STRENGTH AND METHOD FOR MAKING SAME**

(84) Etats contractants désignés:
**DK FR GB**

(30) Priorité: **21.12.2001 FR 0116653**

(43) Date de publication de la demande:
**22.09.2004 Bulletin 2004/39**

(73) Titulaires:
• **Institut Français du Pétrole**
**92852 Rueil-Malmaison Cedex (FR)**
• **COFLEXIP**
**75116 Paris (FR)**

(72) Inventeurs:
• **AVERBUCH, Daniel**
**F-92500 Rueil Malmaison (FR)**
• **LEROY, Jean-Marc**
**F-92500 Rueil Malmaison (FR)**
• **COUTAREL, Alain**
**F-76130 Mont Saint Aignan (FR)**

(56) Documents cités:
WO-A1-01/8684      WO-A1-00/22337
WO-A1-02/01104     FR-A- 2 229 912
GB-A- 1 423 059    NL-A- 7 711 212
US-A- 1 763 360    US-A- 3 500 869
US-A- 3 858 616    US-A- 4 013 100
US-A- 5 261 462    US-A- 5 275 209
US-A- 5 813 439    US-A- 6 085 799
US-B1- 6 283 161

• AMERICAN PETROLEUM INSTITUTE: 'upstream segment API Specification' SPECIFICATION FOR UNBONDED FLEXIBLE PIPE 01 Juillet 2000, SECOND EDITION NOVEMBER 1999,
• AMERICAN PETROLEUM INSTITUTE -API RECOMMENDED PRACTICE 17B: 'Recommended practice for flexilble pipe' 01 Décembre 1998, XPSECOND EDITION

**Description**

La présente invention se rapporte à une structure de conduite flexible et sa méthode de fabrication. L'invention a pour but de limiter le flambage des éléments allongés servant d'armure de renfort mécanique de la structure d'une conduite flexible.

Les conduites flexibles sont notamment utilisées par l'industrie pétrolière pour convoyer le pétrole d'une tête de puits implantée au fond de la mer à une installation de traitement située à la surface de la mer. Les conduites installées au fond de la mer, couramment appelées « flow line », subissent principalement des contraintes mécaniques statiques, par contre, les conduites reliant le fond de la mer à la surface, couramment appelées « riser », sont sollicitées mécaniquement de manière statique et dynamique.

Dans la présente description le terme « fil » désigne des éléments allongés dont une dimension est très grande par rapport aux autres.

La structure d'une conduite flexible, notamment décrite dans les normes API 17 B et API 17 J établies par l'American Petroleum Institute sous l'intitulé « Recommended Practice for Flexible Pipe », se présente généralement sous la forme d'un tube composé de nappes de fils de renfort assurant la résistance mécanique et de gaines en polymère assurant l'étanchéité. Les fils de renfort sont enroulés suivant un mouvement hélicoïdal sur la conduite flexible pour former différentes nappes cylindriques superposées dont les axes se confondent avec celui du tube. Les fils enroulés selon un angle proche de 90 degrés par rapport à l'axe du tube constituent des nappes, couramment appelées carcasse ou voûte, participant notamment à la résistance à la pression interne et/ou externe de la conduite flexible, tandis que les fils enroulés selon un angle compris entre 25 et 55 degrés par rapport à l'axe du tube constituent des nappes, couramment appelées armures de traction, participant principalement à la résistance à la traction et à la compression axiale de la conduite flexible.

Lors de l'opération de mise en place, un bateau apporte sur le lieu du champ pétrolier la conduite flexible enroulée sur des bobines. Pendant la descente de la conduite flexible dans la mer, on ferme à l'aide d'un bouchon l'extrémité de la conduite qui est immergée dans l'eau. Cette mesure a deux avantages. D'une part, on évite de remplir la conduite flexible d'eau de mer indésirable dans la suite des opérations et, d'autre part, on bénéficie de l'effet de flottaison qui réduit le poids imposé à la conduite au niveau de la surface de la mer. Mais dans des structures de grande profondeur d'eau, obturer l'extrémité de la conduite descendue dans la mer présente un inconvénient. En effet, la conduite flexible est soumise à de fortes contraintes de compressions axiales dues à la pression hydrostatique externe qui s'appliquent sur l'extrémité de la conduite. Ce phénomène est nommé « effet de fond inverse ». Selon le mode d'ancrage au fond de la mer, la conduite flexible peut également être soumise à « l'effet de fond inverse » au cours de son utilisation.

Les efforts de compression imposés à l'extrémité de la conduite entraînent une tendance au raccourcissement axial de la conduite. Les fils de renfort et plus particulièrement les fils des nappes d'armure de traction sont comprimés et risquent de se déformer en flambant latéralement et/ou radialement.

Pour éviter une déformation par flambage des fils des nappes d'armure de traction suivant la direction radiale de la conduite, on dispose un ruban de frette sur les parties de la conduite sensibles au flambage. Les nappes d'armure de traction sont entourées circonférenciellement d'un ruban suffisamment résistant pour éviter le déplacement selon la direction radiale vers l'extérieur de la conduite. La nappe disposée sur un rayon inférieur à celui des nappes d'armure de traction, destinée notamment à assurer la résistance à l'écrasement de la conduite flexible, évite le déplacement des fils selon la direction radiale vers l'intérieur de la conduite.

Cependant en frettant la conduite avec un ruban, on bloque seulement les déformations suivant la direction radiale. Les fils restent libres dans l'espace défini par le ruban de frette et la nappe disposée sur un rayon inférieur à la nappe d'armure de traction. Or, la méthode de fabrication des conduites et l'exigence de flexibilité de la conduite imposent de laisser un jeu entre les fils constitutifs d'une nappe d'armure de traction. Ainsi, après fabrication, les fils des nappes d'armure de traction sont répartis à intervalles sensiblement réguliers sur la circonférence de la conduite. Par contre, lors de la pose de la conduite en mer profonde (au-delà de 1500 m), lorsque la pression externe est très importante et que la conduite subit des déformations en flexion, on observe des déplacements transverses des fils dans ledit espace. Suite à des sollicitations dynamiques d'une conduite flexible, par exemple lors du service d'une conduite reliant le fond marin à la surface, on observe également des déplacements transverses des fils dans ledit espace. Les déplacements transverses des fils sont sensiblement perpendiculaires à la direction de la plus grande dimension des fils, les fils restant sensiblement dans l'espace défini par le ruban de frette et la nappe disposée sur un rayon inférieur à la nappe d'armure de traction. Les déplacements transverses des fils tendent à combler certains jeux entre fils et à en agrandir d'autres suivant les cycles de déformation en flexion qui sont imposés à la conduite. Ces déplacements s'effectuent de manière inégale. A la suite de déplacements transverses, certains fils peuvent être isolés, c'est à dire qu'ils ne sont plus en contact avec les fils adjacents, tandis que d'autres fils sont regroupés. Cet isolement est favorable au flambage latéral des fils lorsque la conduite est soumise à des efforts de compression car un fil isolé n'est pas maintenu par les fils adjacents.

L'invention a pour but de limiter les déplacements transverses des fils de renfort constituant des nappes d'armure de traction d'une conduite flexible afin d'empêcher le flambage latéral des fils d'armures.

Il est possible d'augmenter la largeur des fils de renfort de manière à augmenter la raideur à la flexion pour limiter les déplacements transverses des fils. Cependant, cette solution est limitée par la taille maximale admissible des fils, elle impose des contraintes plus élevées dans les armures de traction.

L'analyse du comportement des conduites flexibles soumises à des efforts de compression axiale indique que pour limiter le phénomène de déplacement transverse, il est utile de maîtriser le jeu entre les fils de renfort qui constituent une nappe de manière à limiter les possibilités de mouvements et de déformation des fils.

Le brevet US-5.813.439 propose une conduite flexible sans voûte de pression dans laquelle une première nappe d'armures de traction est formée de fils d'armures agrafés. L'agrafage a pour objectif de permettre à cette nappe d'armure de résister aux contraintes de pression interne qui sont usuellement reprises par la voûte de pression. Ainsi, cette conduite est une conduite flexible sans voûte de pression dont l'agrafage a notamment pour objectif de limiter les déjoints entre fils d'armure pour éviter le fluage de la gaine de pression sur laquelle la nappe d'armure agrafée est enroulée. La nappe d'armure agrafée est préférentiellement armée à un angle proche de l'angle d'équilibre de 55°. Dans ce type de conduite, l'agrafage s'effectue uniquement sur la première nappe d'armure tandis que les autres nappes sont réalisées de manière classique et il n'a donc pas pour objectif de limiter les problèmes de flambage latéral des fils d'armures.

Le brevet WO 99/66246 propose une conduite flexible comportant des fils de renfort noyés dans une matrice en matière polymère. Ce type de conduites, appelées « bonded » dans la profession, n'autorise pas ou très faiblement les mouvements longitudinaux des fils d'armure. Ainsi la position des fils est imposée par la matrice. Mais l'extrusion de la matrice impose d'utiliser de nouveaux moyens et procédés de fabrication de la conduite flexible.

La présente invention a pour but de proposer une structure de conduite flexible dans laquelle on limite le phénomène de déplacement transverse des fils d'une nappe d'armure de traction lors de la pose ou du service des conduites flexibles en mer profonde ou du service en évitant les inconvénients de l'art antérieur. L'invention propose de nouveaux agencements des fils constitutifs de nappes d'armure de traction de conduites flexibles ainsi qu'une méthode de fabrication de telles conduites.

La présente invention propose de limiter le jeu entre les fils de renfort d'une nappe d'armure de traction pour réduire les mouvements transverses tout en gardant la flexibilité de la conduite. Les fils restent libres de mouvement selon la direction de la plus grande dimension des fils. Pour maîtriser le jeu entre deux fils d'une même nappe d'armure, d'une part l'invention propose de limiter le jeu global, c'est à dire dé limiter la valeur de la somme des jeux entre fils mesurés sur la circonférence d'une nappe d'armure, et d'autre part l'invention propose de limiter la valeur maximum du jeu entre deux fils contigus.

De manière générale, l'invention est définie par une méthode de fabrication d'une conduite flexible comprenant au moins une nappe d'armure de traction comportant des éléments allongés de renfort déposés suivant une hélice autour de l'axe de la conduite, les éléments allongés ayant une largeur L et formant un angle $\alpha$ par rapport à l'axe de la conduite. Le jeu qui sépare deux éléments contigus mesuré sur ladite circonférence est

inférieur à $\dfrac{1{,}5 \cdot L}{\cos \alpha}$.

L'invention est une méthode selon la revendication 1 et une conduite selon la revendication 3.

Selon l'invention, les éléments allongés de renfort de la conduite flexible peuvent être revêtus d'une couche de matière plastique, la matière plastique est choisie dans le groupe constitué par : le polyamide 11, le polyuréthanne et le polyfluorure de vinylidène.

Selon l'invention, la conduite flexible peut comporter un élément allongé intermédiaire disposé entre deux éléments allongés de renfort. L'élément allongé intermédiaire peut être de section rectangulaire, de section en forme de T ou de section en forme de U. L'élément allongé intermédiaire est en matière choisie dans le groupe comprenant : l'acier, le polyamide 11, le polyuréthanne et le polyfluorure de vinylidène.

La conduite flexible selon l'invention peut comporter une nappe en matière identique à celle de l'élément allongé intermédiaire, cette nappe recouvre la nappe d'armure.

Selon l'invention, les éléments allongés de renfort de la conduite flexible peuvent être agrafés.

Le principal avantage des agencements des fils selon l'invention est de supprimer les possibilités de déplacements transverses des fils tout en conférant à la conduite la flexibilité et les caractéristiques mécaniques requises. D'une part, les fils de renfort restent libres de mouvements longitudinaux les uns par rapport aux autres pour assurer la flexibilité de la conduite, d'autre part, les caractéristiques mécaniques de la conduite concernant les efforts de traction ne sont pas modifiées.

De plus lorsque les fils de renfort en métal sont en contact avec des éléments en matière plastique, ceux-ci limitent la fatigue de contact et ainsi évitent l'usure des fils métalliques.

En outre, le mode de fabrication des flexibles reste inchangé.

D'autres avantages et caractéristiques de l'invention ressortiront mieux à la lecture de plusieurs modes de réalisation de la présente invention illustrés par les figures annexées parmi lesquelles :

- les figures 1 et 2 représentent une vue en coupe d'une nappe d'armure de traction constituée de fils de renfort et des fils intermédiaires,

- la figure 3 représente une vue en coupe de deux nappes d'armure de traction superposées,
- la figure 6 représente une vue en coupe d'une nappe d'armure de traction constituée de fils de renfort et des fils intermédiaires de section en forme de U,
- la figure 7 représente une vue en coupe d'une nappe d'armure de traction constituée de fils métalliques revêtus de matière plastique.

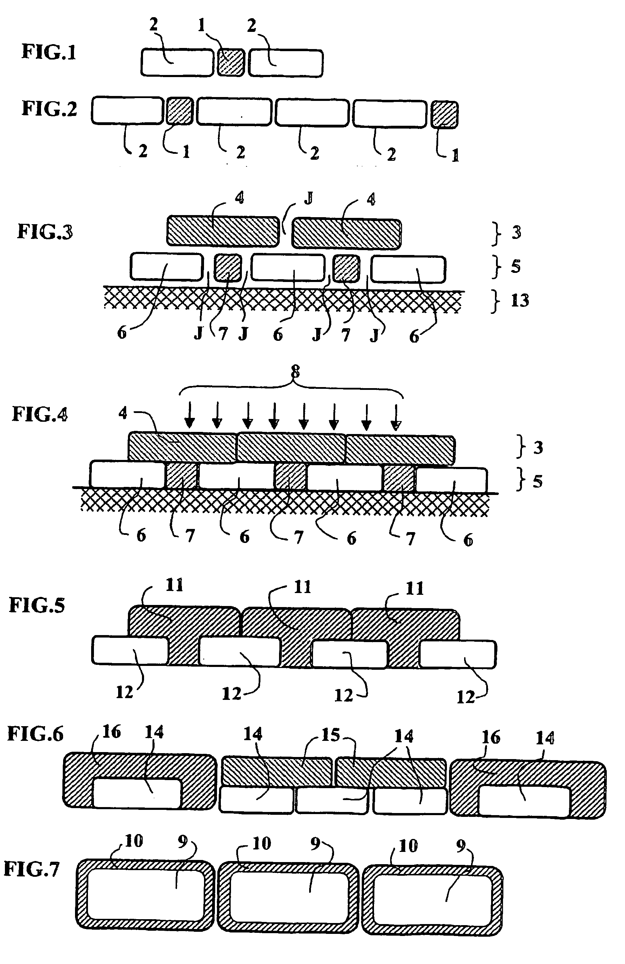

Les modes de réalisation des figures 4 et 5 ne sont pas couverts par l'invention.

Dans la présente description les figures qualifiées de « vue en coupe d'une nappe » correspondent à une coupe effectuée perpendiculairement à l'axe de la conduite. Seuls quelques fils d'une ou de plusieurs nappes d'armure sont représentés, sans tenir compte de la courbure des nappes.

Selon un premier mode de réalisation de l'invention illustré par la figure 1, on fabrique une nappe d'armure de traction en déposant un fil intermédiaire (1) entre deux fils de renfort (2). La fréquence de pose d'un fil intermédiaire entre deux fils de renfort dépend notamment de la taille de la conduite et des fils, et des performances des moyens de fabrication de la nappe d'armure de traction. Les fils intermédiaires (1) peuvent être, comme le montre la figure 2, déposés régulièrement, après trois fils de renfort (2) consécutifs. Les fils intermédiaires peuvent également être répartis sur la circonférence de la nappe de manière irrégulière. La pose des fils de renfort (2) et des fils intermédiaires (1) des nappes d'armure de traction sur le flexible est réalisée selon le principe de fabrication connu de l'art antérieur.

La section d'un fil désigne une vue selon une coupe orthogonale à la direction de la longueur du fil. L'épaisseur du fil désigne une dimension de la section du fil, l'épaisseur s'étendant selon une direction radiale de la conduite lorsque le fil est posé sur la conduite. La largeur L du fil désigne une dimension de la section du fil, la largeur s'étendant selon la direction tangentielle à la conduite lorsque le fil est posé sur la conduite.

Les fils de renfort et les fils intermédiaires ont de préférence une section transversale rectangulaire. Cette géométrie permet de mettre en contact le fil avec les autres éléments de la conduite flexible selon des liaisons plan/plan qui sont stables. En général, on choisit de mettre en contact les deux surfaces du fil de plus grande dimension avec les nappes supérieure et inférieure. Le coté de plus grande dimension de la section rectangulaire d'un fil est appelée largeur du fil.

La pose des fils intermédiaires a pour fonction de réduire le jeu entre les fils constituant une nappe. On définit le jeu disponible entre les fils constituant une nappe par la somme des jeux entre les différents fils, les jeux étant mesurés sur la circonférence de la nappe dans le plan perpendiculaire à l'axe de la conduite flexible. Ce jeu disponible peut être exprimé en pourcentage : la somme des jeux divisée par la circonférence de la nappe.

Selon l'art antérieur, pour une conduite flexible de diamètre intérieur de 12 pouces, le diamètre moyen des nappes d'armure de traction est d'environs 380 mm et le jeu disponible est d'environs 10% de la circonférence, c'est à dire environs 120 mm. En utilisant des fils de renfort de section rectangulaire, de 12 mm de large, disposés selon un angle de 35° par rapport à l'axe de la conduite flexible, une nappe d'armure de traction est constituée de 77 fils de renfort.

L'invention propose de limiter le jeu disponible de la nappe d'armure de traction à environs 2,5%. Ainsi, pour la conduite de diamètre intérieur de 12 pouces, on peut disposer dans les jeux de la nappe d'armure comportant 77 fils de renfort, par exemple, 15 fils intermédiaires de 5 mm de large ou 25 fils intermédiaires de 3 mm de large.

Pour rendre le jeu disponible sensiblement nul, on peut disposer dans les jeux de la nappe d'armure de traction, par exemple, 20 fils intermédiaires de 5 mm de large ou 34 fils intermédiaires de 3 mm de large.

Les figures 3 et 4 représentent une amélioration du mode de réalisation présenté par les figures 1 et 2. On dispose une nappe (5) d'armure de traction selon le mode de réalisation de la figure 1. Des fils de renfort (6) sont disposés en alternance avec les fils intermédiaires (7). Puis, une nappe (3) de fils (4) est disposée sur la surface extérieure de la nappe (5). Les fils (4) et (7) sont de préférence constitués en une matière plus souple que celle des fils de renfort (6). Un jeu, noté (J) sur la figure 3 sépare les fils des nappes (3) et (5). Sans sortir du cadre de l'invention, la nappe (3) peut être disposée sur la surface intérieure de la nappe (5). Les fils (4) sont agencés de manière à recouvrir toute la surface, extérieure ou intérieure, de la nappe (5) et de façon à ce que les interstices entre deux fils (4) ne soient pas en vis-à-vis d'un interstice entre deux fils de la nappe (5). Selon un autre mode de réalisation, la nappe (3) peut être une nappe continue directement déposée sur la nappe (5), par exemple une nappe en matériau thermoplastique extrudée sur la nappe (5).

La figure 3 représente des éléments d'une conduite flexible tels qu'ils se présentent après l'opération de fabrication. Les jeux (J) indiqués entre les fils d'une même nappe sont réduits au minimum tout en restant de valeur positive.

La figure 4 représente les éléments d'une nappe d'armure de traction, selon l'agencement de la figure 3, tels qu'ils se présentent pendant l'opération de descente de la conduite flexible au fond de la mer. La pression hydrostatique, dont la direction d'action est matérialisée par les flèches référencées (8), s'applique sur la couche (3). Cette pression contraint les nappes (3) et (5) contre la nappe (13) sous-jacente à la nappe (5). Les fils (4) et (7), en matière plus souple que celle des fils de renfort, sont déformés de manière à combler et à faire disparaître les jeux (J) entre les différents fils des nappes (3) et (5) et entre les fils de la nappe (3) et la nappe (5). Ainsi, en choisissant la matière des fils (4) et (7) quasiment incompressible, l'agencement de la nappe d'armure de traction est presque figé après déformation des fils (4) et (7). La conduite reste néanmoins flexible du fait de la possibilité de mouvements longitudinaux des fils. Les mouvements longitudinaux sont dirigés sensiblement selon les directions de la plus grande dimension des fils.

On choisira également la matière des fils (4) et (7) de manière à faciliter le glissement des contacts des fils de renfort (6) avec les fils (4) et (7) et des fils (4) avec les fils (7) et à éviter l'usure des fils.

La figure 5 propose de réunir les fils (4) et (7) représentés à la figure 4 en un seul fil de section en forme de T. Ainsi, la nappe d'armure de traction est constituée de fils intermédiaires (11) de section en forme de T déposés en alternance avec des fils de renfort (12). Le pied du T est orienté selon une direction radiale par rapport à la conduite et sépare deux fils de renfort (12). Tandis que la tête du T forme la surface interne ou externe de la nappe. La nappe ainsi réalisée se comporte de la même manière que l'agencement illustré par la figure 4. Les fils intermédiaires (11) en forme de T peuvent également être déposés de manière à laisser plusieurs fils de renfort (12) contigus.

La figure 6 propose de réunir les fils (4) et (7) représentés à la figure 4 en un seul fil de section en forme de U. Le fil intermédiaire (16) en forme de U enveloppe un fil de renfort (14) et en couvre trois faces. Les fils intermédiaires (16) en forme de U peuvent être déposés plus ou moins fréquemment en alternance avec les fils de renfort (14). La figure 6 propose de disposer un fil intermédiaire (16) tous les quatre fils de renfort (14). Les fils de renfort non enveloppés par un fil intermédiaire (16) en forme de U sont recouverts sur une face par des fils (15) de manière à obtenir une nappe d'armure de traction dont la surface extérieure est sensiblement cylindrique.

Pour réaliser les nappes d'armure de traction des figures 1, 2, 3, 4, 5 et 6 les dimensions des fils de renfort et des fils intermédiaires sont déterminées de manière à pouvoir effectuer un montage aisé et à conférer à la conduite flexible les caractéristiques de résistances mécaniques et de flexibilité désirées. En prenant en compte les exigences sur les dimensions des fils on choisit préférentiellement de fabriquer une nappe d'armure de traction dont le jeu entre deux fils successifs est réduit au minimum. Mais pour faciliter la pose des fils sur le flexible, la valeur du jeu entre les fils est positive. Par conséquent la valeur minimum du jeu séparant deux fils successifs d'une même nappe est notamment dictée par les performances du procédé de fabrication de la conduite flexible.

Les fils de renfort sont réalisés en métal tel que l'acier. Ils peuvent également être en matière plastique renforcée telle qu'un polyamide 11 contenant des fibres de verre ou de carbone.

Les fils intermédiaires peuvent être réalisés en matière plastique de tout type. Par exemple en polymère thermoplastique, thermodurcissable ou un élastomère tel le polyamide 11, le polyuréthanne ou le polyfluorure de vinylidène. La matière plastique peut être renforcée par des fibres de carbone, des fibres de verre, des fibres d'aramide ou par tout autre type de charge de renfort. Les fils intermédiaires peuvent également consister en des fils en métal identique ou différent de celui des fils de renfort.

La figure 7 représente un second mode de réalisation de l'invention. Les fils de renfort (9) constituant la nappe d'armure de traction sont revêtus d'une gaine (10) en matière plus souple que celle des fils de renfort. Une gaine (10) peut être appliquée sur un fil de renfort (9). Sans s'éloigner du cadre de l'invention, les fils de renfort peuvent être revêtus d'une matière plus souple que celle des fils de renfort uniquement sur certaines faces. Par exemple, seules les faces en contact avec les éléments de la même nappe d'armures sont revêtues d'une telle matière. Tout procédé connu de l'homme du métier peut être utilisé pour réaliser le revêtement des fils de renfort, notamment l'extrusion, la projection, le collage.

Pour réaliser la nappe d'armure de traction de la figure 7, on utilise également le principe de pose des fils de renfort (9) selon un mouvement hélicoïdal. Mais avant l'opération de pose, on procède à l'application de la gaine (10). Les fils de renfort revêtus d'une gaine sont posés sur la conduite flexible de manière à ce que le jeu entre deux fils successifs de la nappe formée soit très faible.

Selon l'art antérieur, pour une conduite flexible de diamètre intérieur de 12 pouces, le diamètre moyen des nappes d'armure de traction est d'environs 380 mm et le jeu disponible est d'environs 10%, c'est à dire environs 120 mm. En utilisant des fils de renfort de section rectangulaire, de 12 mm de large, disposés selon un angle de 35° par rapport à l'axe de la conduite flexible, une nappe d'armure de traction est constituée de 77 fils de renfort.

Ainsi, pour la conduite de diamètre intérieur de 12 pouces, on peut revêtir les 77 fils d'une couche de matière épaisse de 0,5 mm afin de limiter le jeu disponible de la nappe d'armure à environs 2,5%.

Le revêtement (10) des fils (9) peut être réalisé en matière plastique de tout type. Par exemple en polymère thermoplastique, thermodurcissable ou un élastomère tel le polyamide 11, le polyuréthanne ou le polyfluorure de vinylidène. La matière plastique peut être renforcée par des fibres de carbone, des fibres de verre, des fibres d'aramide ou par tout autre type de charge de renfort. Le revêtement peut également être réalisé en matière céramique.

Il est possible de combiner les différents modes de mise en oeuvre de l'invention décrits en référence aux figures 1, 2, 3, 5, 6 et 7 sans sortir du cadre de l'invention.

Selon un troisième mode de réalisation de l'invention, chaque fil constituant une nappe d'armure de traction est agrafé aux fils voisins de la même nappe d'armure. Par exemple, la section des fils peut être en forme de T ou de U. Cet agrafage permet de contrôler l'interstice entre deux fils d'armure contigu. Il permet également de limiter les déplacements des fils. Lorsque la conduite flexible est en service, chaque fil est retenu à l'endroit où sa contrainte de flambage est maximum par un fil adjacent ayant une contrainte de flambage plus faible.

## Revendications

1. Méthode de fabrication d'une conduite flexible comprenant au moins une nappe d'armure de traction constituée d'éléments allongés comportant des éléments allongés métalliques de renfort, lesdits éléments allongés étant déposés suivant une hélice autour de l'axe de la conduite, les éléments allongés ayant une largeur L et formant un angle $\alpha$ compris entre 25 et 55 degrés par rapport à l'axe de la conduite, **caractérisée en ce que** la somme des jeux entre les éléments allongés mesurés sur la circonférence de la nappe d'armure de traction est inférieure à 3 % de ladite circonférence, **en ce que** le jeu qui sépare deux éléments contigus mesuré sur ladite circonférence est inférieur à $\dfrac{1,5 \cdot L}{\cos \alpha}$ tout en restant de valeur positive et **en ce que** les éléments allongés restent libres de mouvement selon la direction de la plus grande dimension des éléments allongés.

2. Méthode de fabrication selon la revendication 1, **caractérisée en ce qu'**on agrafe entre eux les éléments allongés de renfort d'une nappe d'armure.

3. Conduite flexible comprenant une nappe d'armure de traction constituée d'éléments allongés comportant des éléments allongés métalliques de renfort, lesdits éléments allongés étant déposés suivant une hélice autour de l'axe de la conduite, les éléments allongés ayant une largeur L et formant un angle $\alpha$ compris entre 25 et 55 degrés par rapport à l'axe de la conduite, **caractérisée en ce que** la somme des jeux entre les éléments allongés mesurés sur la circonférence de la nappe d'armure de traction est inférieure à 3 % de ladite circonférence et **en ce que** le jeu qui sépare deux éléments contigus mesuré sur ladite circonférence est inférieur à $\dfrac{1,5 \cdot L}{\cos \alpha}$ tout en restant de valeur positive, et **en ce que** les éléments allongés restent libres de mouvement selon la direction de la plus grande dimension des éléments allongés.

4. Conduite flexible selon la revendication 3, **caractérisée en ce que** les éléments allongés de renfort sont revêtus d'une couche de matière plastique.

5. Conduite flexible selon la revendication 4, **caractérisée en ce que** la matière plastique est choisie dans le groupe constitué par : le polyamide 11, le polyuréthanne et le polyfluorure de vinylidène.

6. Conduite flexible selon la revendication 5, **caractérisée en ce qu'**un élément allongé intermédiaire est disposé entre deux éléments allongés de renfort.

7. Conduite flexible selon la revendication 6, **caractérisée en ce que** l'élément allongé intermédiaire est de section rectangulaire.

8. Conduite flexible selon la revendication 6, **caractérisée en ce que** l'élément allongé intermédiaire est de section en forme de T.

9. Conduite flexible selon la revendication 6, **caractérisée en ce que** l'élément allongé intermédiaire est de section en forme de U.

10. Conduite flexible selon l'une des revendications 6 à 9, **caractérisée en ce qu'**une nappe en matière identique à celle de l'élément allongé intermédiaire recouvre la nappe d'armure.

11. Conduite flexible selon l'une des revendications 6 à 10, **caractérisée en ce que** l'élément allongé intermédiaire est en matière choisie dans le groupe comprenant : l'acier, le polyamide 11, le polyuréthanne et le polyfluorure de vinylidène.

12. Conduite flexible selon la revendication 3, **caractérisée en ce que** les éléments allongés de renfort sont agrafés.

## Patentansprüche

1. Verfahren zur Herstellung einer flexiblen Leitung, die wenigstens eine Zugbewehrungsbahn aufweist, zusammengesetzt aus länglichen Elementen, aufweisend längliche metallische Verstärkungselemente, wobei die länglichen Elemente nach Art einer Helix um die Achse der Leitung angeordnet sind, wobei die länglichen Elemente eine Breite L haben und einen Winkel $\alpha$ zwischen 25 und 55 Grad im Verhältnis zur Achse der Leitung bilden, **dadurch gekennzeichnet, dass** die Summe der Freiräume zwischen den länglichen Elementen, gemessen über den Umfang der Zugbewehrungsbahn, weniger als 3 % dieses Umfangs beträgt, und dass der zwei angrenzend Elemente trennende Freiraum, gemessen über den Umfang, kleiner als $\dfrac{1,5 \cdot L}{\cos \alpha}$ ist, wobei dieser Wert stets positiv ist und dass die länglichen Elemente in ihrer Bewegung in Richtung der größten Dimension der länglichen Elemente frei bleibend sind.

2. Herstellungsverfahren nach Anspruch 1, **dadurch gekennzeichnet, dass** man die länglichen Verstärkungselemente einer Bewehrungsbahn miteinander verhakt.

3. Flexible Leitung aufweisend eine Zugbewehrungsbahn, zusammengesetzt aus länglichen Elementen, aufweisend längliche metallische Verstärkungselemente, wobei die länglichen Elemente nach Art einer Helix um die Achse der Leitung angeordnet sind, wobei die länglichen Elemente eine Breite L haben und einen Winkel $\alpha$ zwischen 25 und 55 Grad im Verhältnis zur Achse der Leitung bildend sind, **dadurch gekennzeichnet, dass** die Summe der Freiräume zwischen den länglichen Elementen, gemessen über den Umfang der Zugbewehrungsbahn, weniger als 3 % dieses Umfangs beträgt, und dass der zwei angrenzend Elemente trennende Freiraum, gemessen über den Umfang, kleiner als $\dfrac{1,5 \cdot L}{\cos \alpha}$ ist, wobei dieser Wert stets positiv ist und dass die länglichen Elemente in ihrer Bewegung in Richtung der größten Dimension der länglichen Elemente frei bleibend sind.

4. Flexible Leitung nach Anspruche 3, **dadurch gekennzeichnet, dass** die länglichen Verstärkungselemente mit einer Schicht aus Kunststoff überzogen sind.

5. Flexible Leitung nach Anspruch 4, **dadurch gekennzeichnet, dass** der Kunststoff aus der durch Polyamid 11, Polyurethan und Polyvinylidenfluorid gebildeten Gruppe gewählt ist.

6. Flexible Leitung nach Anspruche 5, **dadurch gekennzeichnet, dass** ein längliches Zwischenelement zwischen zwei länglichen Verstärkungselementen angeordnet ist.

7. Flexible Leitung nach Anspruch 6, **dadurch gekennzeichnet, dass** das längliche Zwischenelement von rechtwinkeligem Querschnitt ist.

8. Flexible Leitung nach Anspruch 6, **dadurch gekennzeichnet, dass** das längliche Zwischenelement von T-förmigem Querschnitt ist.

9. Flexible Leitung nach Anspruch 6, **dadurch gekennzeichnet, dass** das längliche Zwischenelement von U-förmigem Querschnitt ist.

10. Flexible Leitung nach einem der Ansprüche 6 bis 9, **dadurch gekennzeichnet, dass** eine Bahn aus einem Material identisch zu dem des länglichen Zwischenelements die Bewehrungsbahn überdeckt.

11. Flexible Leitung nach einem der Ansprüche 6 bis 10, **dadurch gekennzeichnet, dass** das längliche Zwischenelement aus einem Material besteht, das aus der aus Stahl, Polyamid 11, Polyurethan und Polyvinylidenfluorid gebildeten Gruppe gewählt ist.

12. Flexible Leitung nach einem der Ansprüche 5 und 6, **dadurch gekennzeichnet, dass** die länglichen Verstärkungselemente verhakt sind.

**Claims**

1. A method of manufacturing a flexible pipe comprising at least one tensile armour layer consisting of elongate elements comprising metallic elongate reinforcing elements, said elongate elements being arranged helically around the axis of the pipe, the elongate elements having a width L and forming an angle a ranging between 25 and 55 degrees in relation to the axis of the pipe, **characterized in that** the sum of the plays between the elongate elements measured on the circumference of the tensile armour layer is less than 3 % of said circumference, **in that** the play between two contiguous elements measured on said circumference is less than $\dfrac{1.5 \cdot L}{\cos \alpha}$. while remaining of positive value and **in that** the elongate elements can freely move in the direction of the greatest dimension of the elongate elements.

2. A method as claimed in claim 1, **characterized in that** the elongate reinforcing elements of an armour layer are clamped to one another.

3. A flexible pipe comprising a tensile armour layer consisting of elongate elements comprising metallic elongate reinforcing elements, said elongate elements being arranged helically around the axis of the pipe, the elongate elements having a width L and forming an angle $\alpha$ ranging between 25 and 55 degrees in relation to the axis of the pipe, **characterized in that** the sum of the plays between the elongate elements measured on the circumference of the tensile armour layer is less than 3 % of said circumference, **in that** the play between two contiguous elements measured on said circumference is less than $\dfrac{1.5 \cdot L}{\cos \alpha}$. while remaining of positive value and **in that** the elongate elements can freely move in the direction of the greatest dimension of the elongate elements.

4. A flexible pipe as claimed in claim 3, **characterized**

**in that** the elongate reinforcing elements are coated with a layer of a plastic material.

5.  A flexible pipe as claimed in claim 4, **characterized in that** the plastic material is selected from the group consisting of: polyamide 11, polyurethane and polyvinylidene fluoride.

6.  A flexible pipe as claimed in claim 5, **characterized in that** an intermediate elongate element is arranged between two elongate reinforcing elements.

7.  A flexible pipe as claimed in claim 6, **characterized in that** the intermediate elongate element is of rectangular section.

8.  A flexible pipe as claimed in claim 6, **characterized in that** the intermediate elongate element is of T-shaped section.

9.  A flexible pipe as claimed in claim 6, **characterized in that** the intermediate elongate element is of U-shaped section.

10. A flexible pipe as claimed in any one of claims 6 to 9, **characterized in that** a layer made of the same material as the intermediate elongate element covers the armour layer.

11. A flexible pipe as claimed in any one of claims 6 to 10, **characterized in that** the intermediate elongate element is made of a material selected from the group consisting of: steel, polyamide 11, polyurethane and polyvinylidene fluoride.

12. A flexible pipe as claimed in claim 3, **characterized in that** the elongate reinforcing elements are clamped.

EP 1 459 003 B2

FIG.1

FIG.2

FIG.3

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5813439 A

- WO 9966246 A